# EUROPÄISCHE PATENTSCHRIFT

(11) **EP 4 172 729 B1**
(45) Veröffentlichungstag und Bekanntmachung des Hinweises auf die Patenterteilung: **08.10.2025**
(21) Anmeldenummer: 21735597.3
(22) Anmeldetag: 16.06.2021
(51) Int. Cl.: G06F 3/01, G01C 11/06, G01C 21/20, G02B 27/00, G06V 20/10, G06F 3/03, G06F 3/04815, G06V 20/20, G06F 3/0346, G02B 27/01

(54) **VERFAHREN ZUM EINBLENDEN EINES VIRTUELLEN OBJEKTES**
METHOD FOR DISPLAYING A VIRTUAL OBJECT
MÉTHODE D'AFFICHAGE D'UN OBJET VIRTUEL

(30) Priorität: 30.06.2020 AT 602082020; 20.04.2021 AT 502912021
(43) Veröffentlichungstag der Anmeldung: 03.05.2023
(73) Patentinhaber: Peterseil, Thomas, 4052 Ansfelden (AT)
(72) Erfinder: VOITHOFER, Mario, 4052 Ansfelden (AT); PETERSEIL, Thomas, 4052 Ansfelden (AT)
(74) Vertreter: KLIMENT & HENHAPEL
(86) Internationale Anmeldenummer: PCT/EP2021/066273
(87) Internationale Veröffentlichungsnummer: WO 2022/002595

(56) Entgegenhaltungen:
- US-A1- 2019 371 072

## Beschreibung

Die Erfindung betrifft ein Verfahren zum Einblenden eines computergenerierten, virtuellen Objektes in das von einer Person wahrgenommene Blickfeld eines realen Gebäudeinneren, insbesondere in das Sichtfeld einer transparenten Wiedergabeeinheit, wobei das Einblenden des virtuellen Objekts in Abhängigkeit von der momentanen Position und der Blickrichtung der Person erfolgt, und das Einblenden des virtuellen Objekts zusätzlich in Abhängigkeit von der Anwesenheit eines Sicht- oder Bewegungshindernisses für die Person erfolgt, gemäß dem Oberbegriff von Anspruch 1, sowie eine Vorrichtung zur Durchführung des erfindungsgemäßen Verfahrens nach Anspruch 7.

Verfahren dieser Art werden in so genannten "Mixed-Reality (MR)"-Systemen oder "Augmented Reality (AR)"-Systemen verwendet. Hierbei erfolgt das Einblenden eines computergenerierten, virtuellen Objektes in das von einer Person wahrgenommene Blickfeld einer realen Umgebung in Abhängigkeit von der momentanen Position und Blickrichtung der Person, für deren Bestimmung in herkömmlicher Weise unterschiedliche Sensoren wie Beschleunigungssensoren (Accelerometer oder G-Sensoren), mitunter auch in Kombination mit Magnetometern und/oder Gyroskopen, sowie GPS-Systeme verwendet werden. Die momentane Position und Blickrichtung der Person entscheiden zunächst darüber, ob überhaupt ein virtuelles Objekt eingeblendet wird. Das Einblenden des virtuellen Objekts in seiner Positionierung und Größe im Blickfeld der Person wird in weiterer Folge maßgeblich in Abhängigkeit von der momentanen Position der beobachtenden Person, insbesondere in Abhängigkeit vom Abstand zur beobachtenden Person vorgenommen, um die realistisch wirkende Illusion eines virtuellen Abstandes zu erzeugen. Hierfür werden insbesondere Wiedergabeeinheiten in Form von Datenbrillen verwendet, also Vorrichtungen, die wie eine Brille getragen werden und in der Lage sind virtuelle Objekte in der realen Welt anzuzeigen und diese Objekte in Relation zu realen Objekten im Raum zu positionieren. Solche Datenbrillen werden auch als "Augmented-Reality"-Brillen oder "Mixed-Reality"-Brillen bezeichnet. Eine Person, die eine solche Brille aufgesetzt hat, sieht die Umgebung wie durch eine normale Sehbrille, allerdings können ihr (holographisch virtuelle) Objekte in das Sichtfeld eingeblendet werden. Alternativ ist auch die Verwendung von Linsen denkbar, die als Wiedergabeeinheit das Einblenden von virtuellen Objekten in das Blickfeld der Person erlauben.

Die Anwendung dieser Technologie und vor allem das korrekte Einblenden von virtuellen Objekten für eine Person, die sich in einem Gebäudeinneren bewegt, sind mit zusätzlichen Schwierigkeiten verbunden, weil aufgrund von Wänden, Türen, Raumteiler oder auch Möbel je nach Position und Blickrichtung der Person einzublendende virtuelle Objekte für die Person sichtbar sein können oder nicht. Ein möglicher Anwendungsbereich besteht etwa in der Ausbildung und im Training von Einsatzkräften der Polizei, der Feuerwehr oder des Militärs. Die Einsatzkräfte bewegen sich dabei bei unterschiedlichen Lichtverhältnissen und mitunter auch unter akustischer Beschallung durch das Gebäudeinnere und müssen auf unterschiedliche Szenarien richtig reagieren, die durch das Einblenden virtueller Objekte verwirklicht werden. So könnten etwa im Rahmen einer Ausbildung Einsatzkräfte der Polizei darin geschult werden ein Gebäude nach Tätern zu durchsuchen, wobei die Täter von einem Ausbildungsleiter als virtuelle Objekte hinter Wänden, Türen, Möbelstücken und dergleichen positioniert werden und je nach Position und Blickrichtung des Auszubildenden sichtbar sind oder verdeckt.

Ein gattungsgemäßes Verfahren wird in der US 2019/371072 A1 beschrieben. In der US 2002/0196202 A1 und der US 2003/0210228 A1 wird beispielsweise ein Verfahren beschrieben, bei dem Einsatzkräften, die sich in einer Einsatzsituation in einem Gebäudeinneren bewegen, anhand eines dem Einsatzleiter als digitales Abbild vorliegenden Gebäudeplans Informationen in eine Datenbrille eingeblendet werden. Solche Informationen können etwa Warnmeldungen über mögliche Gefahren sein, oder auch Navigationshilfen in Form von Pfeilen und dergleichen. Die momentane Position der Einsatzkräfte wird anhand von Sensoren ermittelt und dem Einsatzleiter in seinem digitalen Abbild des Gebäudeplans angezeigt. Ein Einblenden von virtuellen Objekten unter Berücksichtigung einer möglichen Verdeckung durch bauliche Gegebenheiten oder Möbelstücke ist bei einem Verfahren gemäß der US 2002/0196202 A1 und der US 2003/0210228 A1 nicht möglich. In der US 2002/0191004 A1 wird ein weiteres Verfahren zum Einblenden virtueller Objekte zur Ausbildung von Einsatzkräften beschrieben.

In der US 2018/0330184 A1 wird ein Verfahren zur Erstellung eines digitalen Abbilds von Oberflächen eines Gebäudeinneren beschrieben, wobei das Gebäudeinnere mit einem Sensor zur Abstandsmessung vermessen wird. Das Ergebnis der Abstandsmessungen ist eine dreidimensionale Datenpunktwolke, aus der durch Anwendung mathematischer Verfahren der Verlauf von Böden, Decken und Wänden der Innenräume rekonstruiert wird. Ein Einblenden virtueller Objekte ist in der US 2018/0330184 A1 nicht vorgesehen.

Es besteht daher das Ziel der Erfindung darin ein Verfahren zum Einblenden eines computergenerierten, virtuellen Objektes in das von einer Person wahrgenommene Blickfeld eines realen Gebäudeinneren bereitzustellen, bei dem das virtuelle Objekt gemäß der momentanen Sichtachsen der Person unter Berücksichtigung verdeckender Elemente wie Wände, Türe, Raumteiler oder auch Möbel korrekt eingeblendet werden kann.

Dieses Ziel wird durch die Merkmale von Anspruch 1 erreicht. Anspruch 1 bezieht sich auf ein Verfahren zum Einblenden eines computergenerierten, virtuellen Objektes in das von einer Person wahrgenommene Blickfeld eines realen Gebäudeinneren, insbesondere in das Sichtfeld einer transparenten Wiedergabeeinheit, wobei das Einblenden des virtuellen Objekts in Abhängigkeit von der momentanen Position und der Blickrichtung der Person erfolgt, und das Einblenden des virtuellen Objekts zusätzlich in Abhängigkeit von der Anwesenheit eines Sicht- oder Bewegungshindernisses für die Person erfolgt, wobei erfindungsgemäß vorgeschlagen wird, dass das Sicht- oder Bewegungshindernis anhand eines aus planaren Flächenelementen gebildeten, digitalen Abbilds von Oberflächen des Gebäudeinneren ermittelt wird, indem eine horizontale Schichtung zwischen einer Bodenebene des Gebäudeinneren zu einer angenommenen Augenhöhenebene mit einer Mehrzahl von Schichtlagen einer vorgegebenen Schichtdicke vorgenommen wird, und horizontale Flächenelemente oder eine Gesamtheit aneinandergrenzender horizontaler Flächenelemente in derselben Schichtlage als Sicht- oder Bewegungshindernis ermittelt werden, falls in deren Umfangsbereich horizontale Nebenflächenelemente auffindbar sind, die um mehr als eine Schichtlage unterhalb des horizontalen Flächenelements oder der Gesamtheit aneinandergrenzender horizontaler Flächenelemente liegen, sowie vertikale Flächenelemente als Sicht- oder Bewegungshindernis ermittelt werden.

Ausgangspunkt des erfindungsgemäßen Verfahrens ist die Erstellung eines digitalen Abbilds von dem Rauminneren zugewandten Oberflächen des Gebäudeinneren, das aus planaren Flächenelementen gebildet wird. Eine Möglichkeit besteht darin, dass ein solches digitales Abbild bereits in Form eines digitalen Gebäudeplans existiert, wobei der digitale Gebäudeplan neben Wänden, Raumteiler oder Türen auch bereits die Positionierung von Möbelstücken umfasst. Eine weitere Möglichkeit zur Erstellung eines digitalen Abbilds des Gebäudeinneren besteht darin, dass es durch eine Vermessung des Gebäudeinneren mit einer zur Messung von Tiefeninformation fähigen Kamera ermittelt wird. In diesem Fall kann die zur Messung von Tiefeninformation fähige Kamera an der Wiedergabeeinheit montiert sein, mit der das Gebäudeinnere durchschritten wird. Eine zur Messung von Tiefeninformation fähige Kamera wird auch als 3D-Kamera bezeichnet und kann etwa als ToF ("Time-of-Flight")-Kamera ausgeführt sein. Bei ToF-Kameras handelt es sich um Kameras, die nicht nur ein 2D-Bild aufnehmen, sondern für jedes Aufnahmepixel auch eine Tiefeninformation messen. Unter Tiefeninformation werden Informationen über die Distanzen zwischen den einzelnen Objekten einer Szene und der ToF-Kamera verstanden. Mithilfe bekannter mathematischer Verfahren kann aus den so gewonnenen "Scans" an Tiefeninformationen ein digitales Abbild gewonnen werden, das die Oberflächen des Gebäudeinneren mithilfe von Flächenelementen approximiert. Diese Flächenelemente können etwa als planare Flächenelemente in Form von Dreiecken, Vierecken oder Sechsecken vorliegen, die die zu approximierende Oberfläche lückenlos nachbilden. Die gemeinsamen Eckpunkte dieser Flächenelemente werden dabei auch als Knotenpunkte ("vertices") bezeichnet, die dem Betrachter zugewandte Seite der Flächenelemente als "faces" und die Gesamtheit der Knotenpunkte auch als "mesh". Eine weitere Möglichkeit bekannter mathematischer Verfahren besteht darin den Flächenelementen auch eine Orientierung zuzuschreiben, indem eine Flächennormale auf das betreffende Flächenelement errechnet wird. Das erfindungsgemäße Verfahren bedient sich dieser Möglichkeiten, indem zunächst ein aus planaren Flächenelementen gebildetes digitales Abbild von Oberflächen des Gebäudeinneren ermittelt wird. Erfindungsgemäß werden jedoch in weiterer Folge nur jene Flächenelemente herangezogen, die zwischen einer Bodenebene des Gebäudeinneren und einer angenommenen Augenhöhenebene liegen, die eine Maximalhöhe für die nachfolgenden Verfahrensschritte definiert. Unter einer Augenhöhenebene wird dabei in der Regel eine horizontale Ebene verstanden, die sich in Augenhöhe befindet. Die genaue Höhenlage ist dabei nicht wesentlich, sie wird im Rahmen des gegenständlichen Verfahrens beispielsweise mit einer Höhe von 1,80m angenommen. Das digitale Abbild des Gebäudeinneren wird somit gewissermaßen in Augenhöhenebene "abgeschnitten". Des Weiteren werden erfindungsgemäß jene Flächenelemente ermittelt, deren Flächennormale horizontal oder vertikal verlaufen, also Flächenelemente, deren Orientierung vertikal oder horizontal ist. Zudem wird erfindungsgemäß eine horizontale Schichtung zwischen der Bodenebene des Gebäudeinneren und der angenommenen Augenhöhenebene mit einer Mehrzahl von Schichtlagen einer vorgegebenen Schichtdicke vorgenommen.

Zum Einen werden nun erfindungsgemäß vertikale Flächenelemente, die Teil des digitalen Abbilds sind, als Sicht- oder Bewegungshindernisse ermittelt. Diese Sicht- oder Bewegungshindernisse werden in der Regel Wände, Raumteiler oder hohe Möbelstücke wie Schränke und dergleichen repräsentieren. Zum Anderen werden erfindungsgemäß horizontale Flächenelemente oder eine Gesamtheit aneinandergrenzender horizontaler Flächenelemente in derselben Schichtlage als Sicht- oder Bewegungshindernisse ermittelt, falls in deren Umfangsbereich horizontale Nebenflächenelemente auffindbar sind, die um mehr als eine Schichtlage unterhalb des horizontalen Flächenelements oder der Gesamtheit aneinandergrenzender horizontaler Flächenelemente liegen. Diese Sicht- oder Bewegungshindernisse werden in der Regel niedrige Möbelstücke wie Tische und dergleichen repräsentieren. Mithilfe der so ermittelten Flächenelemente des digitalen Abbilds als Sicht- oder Bewegungshindernisse kann das Einblenden des virtuellen Objekts in Abhängigkeit von der Anwesenheit des Sicht- oder Bewegungshindernisses auf einfache Weise erfolgen, wie noch näher erläutert werden wird.

Die Schichtdicke für die Schichtlagen der horizontalen Schichtung kann etwa mit einem Wert von 5-30 cm vorgegeben sein. Diese Schichtung ermöglicht es etwa, dass horizontale Flächenelemente, die sich in vertikal aufeinanderfolgenden Schichtlagen befinden, als Stufen identifiziert werden können. Des Weiteren ist es auch möglich zur besseren Visualisierung der Höhenlage insbesondere bei einer zweidimensionalen Projektion des digitalen Abbildes die horizontalen Flächenelemente in unterschiedlichen Schichtlagen mit unterschiedlichen Farben darzustellen. Daher wird auch vorgeschlagen, dass das digitale Abbild mit den als Sicht- oder Bewegungshindernis ermittelten Flächenelementen als zweidimensionales Abbild ermittelt wird.

Um das digitale Abbild zu verbessern können "schräge" Flächenelemente, also Flächenelemente, die weder als horizontale noch als vertikale Flächenelemente identifiziert werden, berücksichtigt werden. So könnten sie den horizontalen oder vertikalen Flächenelementen zugeordnet werden, falls sie vorgegebenen Kriterien entsprechen, etwa indem deren Flächennormale innerhalb vorgegebener Toleranzbereiche von den entsprechenden Flächennormalen abweichen.

Mithilfe der als planare Flächenelemente des digitalen Abbilds vorliegenden Sicht- oder Bewegungshindernisse kann das Einblenden des virtuellen Objekts in Abhängigkeit von der Anwesenheit eines Sicht- oder Bewegungshindernisses auf einfache Weise erfolgen, indem im Rahmen eines Berechnungsalgorithmus Verbindungslinien zwischen einem der momentanen Position und Blickrichtung entsprechenden Augpunkt der Person und Bildpunkten des virtuellen Objekts errechnet und innerhalb des Abstandes zwischen dem Augpunkt und den Bildpunkten des virtuellen Objekts das Vorliegen von Schnittpunkten der Verbindungslinien mit dem als planare Flächenelemente vorliegenden Sicht- oder Bewegungshindernis ermittelt werden, wobei bei Vorliegen eines Schnittpunkts für einen Bildpunkt des virtuellen Objekts der betreffende Bildpunkt im Sichtfeld der Person nicht oder nicht sichtbar eingeblendet wird, und bei Fehlen eines Schnittpunkts für einen Bildpunkt des virtuellen Objekts der betreffende Bildpunkt sichtbar eingeblendet wird. Der Augpunkt ist ein Begriff aus der Zentralperspektivität und bezeichnet in herkömmlicher Weise einen Punkt im Raum, der der Position einer Person entspricht und dem die "Sehstrahlen" entspringen. Zwischen diesem Augpunkt und Bildpunkten des darzustellenden, virtuellen Objektes werden zunächst Verbindungslinien errechnet. In weiterer Folge wird ermittelt, ob innerhalb des Abstandes zwischen dem Augpunkt und den Bildpunkten des virtuellen Objekts Schnittpunkte der Verbindungslinien mit einem als planares Flächenelement vorliegenden Sicht- oder Bewegungshindernis vorliegen. Erfindungsgemäß wird somit geprüft, ob die Verbindungslinie eines Bildpunktes mit dem Augpunkt ein als Sicht- oder Bewegungshindernis bewertetes Flächenelement schneidet. Im zutreffenden Fall wird der betreffende Bildpunkt des virtuellen Objekts im Sichtfeld der Person nicht oder nicht sichtbar eingeblendet. Eine nicht sichtbare Einblendung kann etwa über eine transparente Einblendung erfolgen, bei der der betreffende Bildpunkt für die beobachtende Person ebenfalls nicht sichtbar wird. Falls kein solcher Schnittpunkt vorliegt, wird der betreffende Bildpunkt sichtbar eingeblendet. Der Berechnungsvorgang beginnend mit der Errechnung der Verbindungslinie und der Klärung, ob ein Schnittpunkt vorliegt, benötigt pro Bildpunkt nur wenige Millisekunden. Der Berechnungsvorgang kann somit rasch genug abgeschlossen werden, um Echtzeit-Anwendungen und eine oftmalige Wiederholung im Zuge der Bewegung der beobachtenden Person durch das Gebäudeinnere zu ermöglichen.

Mithilfe der als planare Flächenelemente des digitalen Abbilds vorliegenden Sicht- oder Bewegungshindernisse kann aber auch eine Anwendung als Navigationshilfe erfolgen, indem es sich bei den in Abhängigkeit von der Anwesenheit eines Sicht- oder Bewegungshindernisses eingeblendeten virtuellen Objekten um Navigationshilfen handelt, die der Person in das Sichtfeld der Wiedergabeeinheit eingeblendet werden. Diese Navigationshilfen können den Einsatzkräften etwa den schnellsten Weg zu einem Zielpunkt unter Berücksichtigung von Bewegungshindernissen anzeigen, oder bei schlechten Sichtverhältnissen eine sichere Bewegung im Gebäudeinneren ermöglichen.

Eine weitere Herausforderung beim korrekten Einblenden virtueller Objekte in das Sichtfeld der Wiedergabeeinheit einer Person, die sich durch ein Gebäudeinneres bewegt, besteht in der exakten Lokalisierung der Person innerhalb des Gebäudes und im Abgleich des Koordinatensystems der Datenbrille mit jenem des digitalen Abbilds. Grundsätzlich wird dabei in an sich bekannter Weise so vorgegangen, dass das Einblenden des virtuellen Objekts immer dann erfolgt, wenn die Person einen Raumbereich betrachtet, in dem die Koordinaten des einzublenden Objekts liegen, und die momentane Position der Person innerhalb eines vorgegebenen Referenzbereiches liegt, oder die Person eine bestimmte, vorgegebene Position erreicht hat. Wenn eine innerhalb des Referenzbereiches befindliche Person einen Raumbereich betrachtet, in dem die Koordinaten des einzublenden Objekts liegen, bietet sich ihr eine Ansicht, die im Wesentlichen vorhersehbar ist. Für diese Ansichten kann ein passendes virtuelles Objekt generiert werden, das aus Bildpunkten aufgebaut ist und in einer Datenbank hinterlegt wird. Begibt sich nun eine Person mit einer Wiedergabeeinheit wie beispielsweise einer Datenbrille in das Gebäudeinnere, so wird zunächst nach dem Einschalten der Datenbrille eine Kalibrierung vorgenommen, indem mittels Positions- und/oder Bewegungssensoren oder einer Kamera die momentane Position und Blickrichtung der zunächst ruhenden Person bestimmt wird. Ausgehend von der bekannten, anfänglichen Position und Blickrichtung wird in weiterer Folge in herkömmlicher Weise mittels unterschiedlicher Sensoren wie Beschleunigungssensoren (Accelerometer oder G-Sensoren), mitunter auch in Kombination mit Magnetometern und/oder Gyroskopen oder Kamerabildern, Änderungen der Position und der Blickrichtung gemessen und die jeweilige momentane Position und Blickrichtung ermittelt. Die Blickrichtung kann über Magnetfeldsensoren, IMU-Sensoren oder auch mittels bildbasierter Orientierungsverfahren bestimmt werden. Beispielhaft kann die Orientierungsbestimmung über einen Bildvergleich zweier zeitlich versetzt aufgenommener Bilder vorgenommen werden. Hierbei wird der horizontale und vertikale Verschub zwischen den beiden Bildern ermittelt und zur Berechnung der horizontalen und vertikalen Orientierungsveränderung verwendet. Der Bildverschub kann hierbei mithilfe von markanten Bildpunkten (sogenannten "Features") berechnet werden, indem die Position (x- und y-Position im Bild) eines solches Features im ersten und im zweiten Bild festgestellt und daraufhin der Versatz festgestellt wird. Dies basiert auf der Annahme, dass sich das Verhältnis von Bilddimension (Breite, Höhe) zu Bildverschub gleich verhält wie das Verhältnis von Blickwinkel (auch als "Field of View" bezeichnet) zu Orientierungsänderung. Diese Berechnung kann sowohl direkt auf der Recheneinheit der Datenbrille als auch auf einer Rechnereinheit eines externen Gerätes erfolgen. Auf Basis eines sogenannten AHRS (Attitude Heading Reference System)-Algorithmus können mithilfe eines Accelerometers, Gyroskops und Magnetometers weitere Orientierungsinformationen gesammelt werden, welche mit den Ergebnissen der bildbasierten Lösung kombiniert werden.

Diese Methoden können aber mitunter fehlerbehaftet sein, sodass eine momentane Position der Person im Zuge der fortgesetzten Bewegung der Person nur mehr ungenau bestimmt wird und das Koordinatensystem der Datenbrille nicht mehr mit jenem des digitalen Abbilds übereinstimmt, was zu fehlerhaften Einblendungen des virtuellen Objekts führt. Daher wird vorgeschlagen, dass mittels einer Kamera in einem vorgegebenen zeitlichen Abstand eine Abfolge von Kamerabildern der von der Person wahrgenommenen, realen Umgebung beispielsweise als RGB-Bilder angefertigt wird, und mithilfe an sich bekannter Verfahren zur Verfolgung von Bildmerkmalen zwischen einem aufgenommenen Kamerabild und einem einer bekannten Aufnahmeposition zugeordneten Referenzbild ein Verschiebungsvektor anhand der Bildmerkmale ermittelt wird, wobei bei Unterschreiten eines vorgegebenen Verschiebungswertes des Verschiebungsvektors die dem entsprechenden Referenzbild zugeordnete, bekannte Aufnahmeposition der Person als momentane Position zugewiesen wird und auf diese Weise eine Synchronisierung der Koordinatensysteme der Datenbrille und des digitalen Abbildes vorgenommen wird. Wie bereits erwähnt wurde, bietet sich der Person bei Betrachtung eines Raumbereiches innerhalb des Gebäudeinneren eine Ansicht, die im Wesentlichen vorhersehbar ist. Von diesen Ansichten können von bekannten Aufnahmepositionen und für bekannte Blickrichtungen Referenzbilder manuell angefertigt und in einer Datenbank einer Rechnereinheit hinterlegt werden. Diesen Referenzbildern werden die jeweiligen, bekannten Aufnahmepositionen zugeordnet. Diese Referenzbilder können nun laufend mit den von der Person aktuell aufgenommenen Kamerabildern verglichen werden. Falls eine annähernde Identität mit einem der Referenzbilder ermittelt wird, kann die entsprechende Aufnahmeposition als momentane Position der Person herangezogen werden. Diese Referenzbilder können daher mit einem Begriff der digitalen Bildverarbeitung auch als "spatial anchors" oder als "optische Marker" bezeichnet werden. Die von der Person aufgenommenen Kamerabilder können aber auch für eine Raumerkennung verwendet werden, indem die Rechnereinheit die Kamerabilder mit den Referenzbildern vergleicht und auch auf diese Weise sofort erkannt werden kann, in welchem Raum sich die Person befindet.

Des Weiteren wird vorgeschlagen, dass mittels einer zur Messung von Tiefeninformation fähigen Kamera der momentanen Position und Blickrichtung der Person entsprechende 3D-Bilder angefertigt werden, und mithilfe bekannter mathematischer Verfahren aus den so gewonnenen 3D-Kamerabildern ein aktualisiertes digitales Abbild ermittelt wird. Bei den erwähnten mathematischen Verfahren kann es sich etwa um jene handeln, die bereits im Zusammenhang mit der Erstellung des digitalen Abbilds beschrieben wurden. Da sich die momentane Ansicht eines Raumbereiches im Vergleich zu einem vorab erstellten digitalen Abbild auch ändern kann, indem etwa ein Möbelstück verschoben oder eine Tür geschlossen wurde, kann es vorteilhaft sein, wenn das digitale Abbild anhand der von der Person momentan wahrgenommenen, realen Umgebung aktualisiert wird.

Des Weiteren betrifft die Erfindung eine Vorrichtung umfassend eine tragbare, transparente Wiedergabeeinheit zum Einblenden eines computergenerierten, virtuellen Objektes in das von einer Person wahrgenommene Blickfeld eines realen Gebäudeinneren, insbesondere in das Sichtfeld der transparenten Wiedergabeeinheit, sowie eine mit der Wiedergabeeinheit über eine bidirektionale Datenverbindung verbundene Rechnereinheit, die zur Durchführung des erfindungsgemäßen Verfahrens ausgelegt ist.

Die Erfindung wird in weiterer Folge anhand von Ausführungsbeispielen mithilfe der beiliegenden Figuren näher erläutert. Es zeigen hierbei die
Fig. 1 eine schematische Übersicht über den grundsätzlichen Ablauf des erfindungsgemäßen Verfahrens,
Fig. 2 eine schematische Ansicht eines Raumplans eines Gebäudeinneren, das mithilfe einer Datenbrille zur Generierung eines digitalen Abbilds und von Referenzbildern vermessen wird,
Fig. 3 eine schematische Übersicht über die erfindungsgemäße Generierung von Sicht- oder Bewegungshindernissen,
Fig. 4 ein Beispiel eines real ermittelten digitalen Abbilds eines Gebäudeinneren, und die
Fig. 5 eine schematische Darstellung zur Erläuterung der horizontalen Schichtung zur Ermittlung der Sicht- oder Bewegungshindernisse.

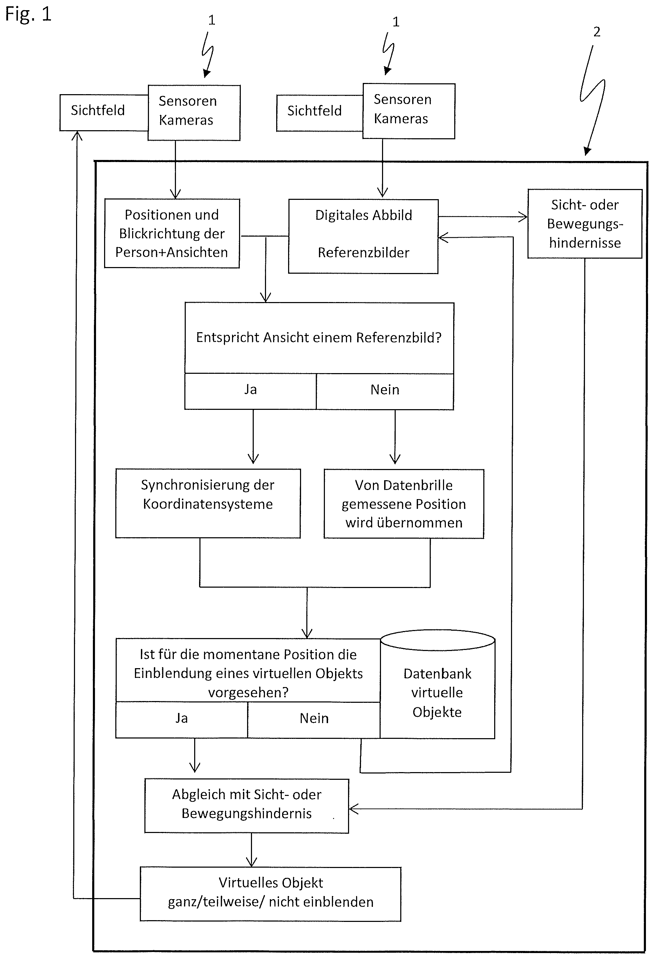

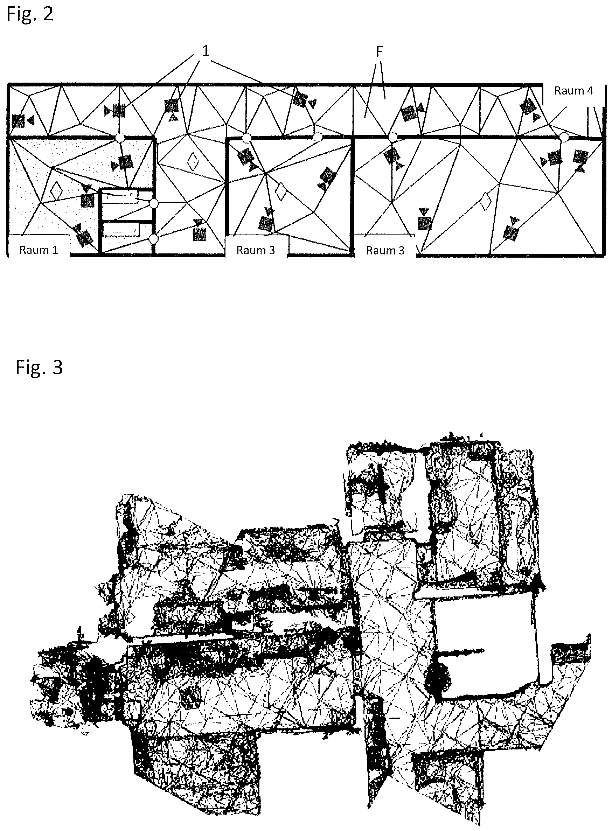

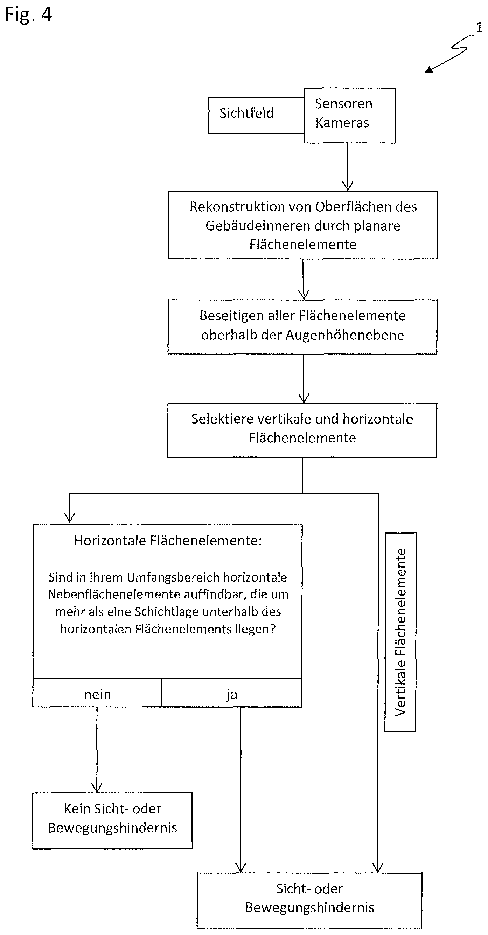

Zunächst wird auf die Fig. 1 Bezug genommen, die eine schematische Übersicht über den grundsätzlichen Ablauf des erfindungsgemäßen Verfahrens zeigt. Zunächst ist ein digitales Abbild der dem Rauminneren zugewandten Oberflächen des Gebäudeinneren zu erstellen. Gemäß der Ausführungsform der Fig. 1 wird hierfür eine Wiedergabeeinheit 1 in Form einer Datenbrille verwendet, die mit einer Kamera zur Aufnahme zweidimensionaler Bilder, mit einer 3D-Kamera zur Aufnahme von mit Tiefeninformation versehenen Bildern sowie mit Sensoren zur Ermittlung von Position und Blickrichtung versehen ist und in der Fig. 1 oben rechts angedeutet ist. Mit einer solchen Wiedergabeeinheit 1 wird das Gebäudeinnere durchschritten, das beispielsweise einen Grundriss gemäß der Fig. 2 aufweist. Die Fig. 2 zeigt schematisch einige Positionen einer Person mit einer solchen Datenbrille 1, die von der Person im Zuge des Durchschreitens der Räume nacheinander eingenommen werden. Das Ergebnis des Durchschreitens sind eine Vielzahl an mit Tiefeninformation versehenen Bildern der Raumansichten, die sich der Person während des Durchschreitens bieten, und die an eine Rechnereinheit 2 gesendet werden. Bei der Rechnereinheit 2 handelt es sich in der Regel um ein externes Gerät wie beispielsweise ein stationärer oder tragbarer Computer oder Tablet. Mithilfe bekannter mathematischer Verfahren kann in der Rechnereinheit 2 aus den so gewonnenen "Scans" an Tiefeninformationen ein digitales Abbild gewonnen werden, das die der Person jeweils zugewandten Oberflächen des Gebäudeinneren mithilfe von Flächenelementen F approximiert. Diese Flächenelemente F sind in der Fig. 2 als planare Flächenelemente F in Form von Dreiecken angedeutet, die die zu approximierenden Oberflächen lückenlos nachbilden. Eine weitere Möglichkeit bekannter mathematischer Verfahren besteht darin den Flächenelementen F auch eine Orientierung zuzuschreiben, indem eine Flächennormale auf das betreffende Flächenelement F errechnet wird. Auf diese Weise können Flächenelemente F als vertikal orientierte Flächenelemente Fv oder als horizontal orientierte Flächenelemente Fh identifiziert werden, aus denen in weiterer Folge Sicht- oder Bewegungshindernisse rekonstruiert werden können, wie später anhand der Fig. 4 erläutert werden soll. Das Ergebnis des "Scans" ist ein dreidimensionaler Mesh des Gebäudeinneren. Sobald eine gewisse Differenz der Höhenkoordinate festgestellt wird, erfolgt die Generierung eines neuen 3D-Modells, da dies als Wechsel des Stockwerkes interpretiert wird. Durch Visualisierung der bereits gescannten Flächen lässt man den Benutzer wissen, was bereits erfasst wurde und wo noch Lücken im Scan sind. Nachdem der Benutzer zufrieden ist, werden die 3D-Modelle für jedes Stockwerk am Server (Tablet-Applikation) oder lokal gespeichert. Darüber hinaus können zusätzlich von jedem Raum ein oder mehrere Referenzbilder beispielsweise als RGB-Bilder aufgenommen werden, die später als Wiedererkennungs-Punkte dienen sollen ("optische Marker") und in einer Datenbank der Rechnereinheit 2 hinterlegt werden. Diesen Referenzbildern werden dabei die jeweiligen, bekannten Aufnahmepositionen zugeordnet, wie sie in der Fig. 2 durch die Rauten angedeutet sind. Anhand dieses Vorgangs kann auch festgestellt werden, welche Räume miteinander verbunden sind. Somit können direkt mögliche Raumwechsel eingeschränkt werden, was bei der Bestimmung des aktuellen Raumes im Positionsbestimmungsverfahren hilfreich sein kann.

Nachdem das digitale Abbild des Gebäudeinneren, die Referenzbilder sowie die Sicht- und Bewegungshindernisse ermittelt wurden, ist die Rechnereinheit 2 für einen Einsatz zum Einblenden virtueller Objekte bereit, die in einer Datenbank der Rechnereinheit 2 gespeichert sind. Mittels eigener Software lassen sich auf dem digitalen Abbild durch Anwendung von benutzerfreundlichen und effizienten Methoden wie Computermaus oder Touch-Steuerung die virtuellen Objekte platzieren und Ereignisse planen. Die Position und Ausrichtung aller virtuellen Objekte werden relativ zum digitalen Abbild abgespeichert. Vorzugsweise kann auch eine Vorschau direkt auf der Rechnereinheit 2 abgespielt werden. Dabei kann das Abspielen der Vorschau auch unter Verwendung des digitalen Abbilds für alternative Blickwinkel stattfinden. Dadurch kann im Zuge einer Trainings- oder Einsatzplanung zuerst der Ablauf eines "Szenarios" geplant und später mit den Personen, die die Anwendung letztendlich durchführen, besprochen werden.

Im Zuge eines solchen Trainings oder Einsatzes bewegt sich eine Person mit einer Wiedergabeeinheit 1 etwa in Form einer Datenbrille, die mit einer Kamera zur Aufnahme zweidimensionaler Bilder, mit einer 3D-Kamera zur Aufnahme von mit Tiefeninformation versehenen Bildern sowie mit Sensoren zur Ermittlung von Position und Blickrichtung versehen ist, durch das Gebäudeinnere. Diese Wiedergabeeinheit 1 ist in der Fig. 1 oben links angedeutet. Bei der Durchführung des Trainings oder Einsatzes werden die Szenario-Informationen wieder von der Rechnereinheit 2 an die Applikation der Wiedergabeeinheit 1 übertragen. Damit das Szenario korrekt abläuft, muss das aktuelle Koordinatensystem der Wiedergabeeinheit 1 mit jenem synchronisiert werden, das für die Erstellung des digitalen Abbilds verwendet wurde. Hierfür werden die zuvor aufgenommenen Referenzbilder verwendet. Liefert die Kamera der Wiedergabeeinheit 1 für eine Ansicht ein Bild, das zuvor aufgenommen wurde, kann die Abweichung der beiden Koordinatensysteme errechnet werden. Die Referenzbilder können auch dazu verwendet werden, das Szenario in eingeschränkter Weise fortzuführen, sollte sich die Wiedergabeeinheit 1 nicht mehr orientieren können, da man durch deren Wiedererkennung auf die Position und Orientierung der Person rückschließen kann. Alternativ wäre es auch denkbar an mehreren Orten sogenannte "Spatial Anchors" zu erstellen. Durch Vergleich der Anchor-Transformationen lässt sich ebenfalls eine Differenz der Startpunkte und der Orientierung errechnen.

Die Position der Wiedergabeeinheit 1 kann an der Rechnereinheit 2 im digitalen Abbild des Raumplanes dargestellt werden.

Mithilfe der als planare Flächenelemente F des digitalen Abbilds vorliegenden Sicht- oder Bewegungshindernisse kann nun das Einblenden eines virtuellen Objekts in Abhängigkeit von der Anwesenheit eines Sicht- oder Bewegungshindernisses auf einfache Weise erfolgen, indem im Rahmen eines Berechnungsalgorithmus Verbindungslinien zwischen einem der momentanen Position und Blickrichtung entsprechenden Augpunkt der Person und Bildpunkten des virtuellen Objekts errechnet und innerhalb des Abstandes zwischen dem Augpunkt und den Bildpunkten des virtuellen Objekts das Vorliegen von Schnittpunkten der Verbindungslinien mit den als planare Flächenelementen F vorliegenden Sicht- oder Bewegungshindernissen ermittelt werden, wobei bei Vorliegen eines Schnittpunkts für einen Bildpunkt des virtuellen Objekts der betreffende Bildpunkt im Sichtfeld der Person nicht oder nicht sichtbar eingeblendet wird, und bei Fehlen eines Schnittpunkts für einen Bildpunkt des virtuellen Objekts der betreffende Bildpunkt sichtbar eingeblendet wird. Das virtuelle Objekt wird somit in Abhängigkeit von der Anwesenheit eines Sicht- oder Bewegungshindernisses entweder zur Gänze, teilweise oder überhaupt nicht sichtbar eingeblendet.

Mithilfe der als planare Flächenelemente F des digitalen Abbilds vorliegenden Sicht- oder Bewegungshindernisse kann aber auch eine Anwendung als Navigationshilfe erfolgen, indem es sich bei den in Abhängigkeit von der Anwesenheit eines Sicht- oder Bewegungshindernisses eingeblendeten virtuellen Objekten um Navigationshilfen handelt, die der Person in das Sichtfeld der Wiedergabeeinheit 1 eingeblendet werden. Diese Navigationshilfen können den Einsatzkräften etwa den schnellsten Weg zu einem Zielpunkt unter Berücksichtigung von Bewegungshindernissen anzeigen, oder bei schlechten Sichtverhältnissen eine sichere Bewegung im Gebäudeinneren ermöglichen.

In der Fig. 1 ist ferner ein Pfeil zu sehen, der für den Fall, dass kein virtuelles Objekte eingeblendet werden soll, zurück zur Generierung eines digitalen Abbilds führt. Dieser Pfeil soll andeuten, dass mittels der an der Wiedergabeeinheit 1 befestigten und zur Messung von Tiefeninformation fähigen Kamera der momentanen Position und Blickrichtung der Person entsprechende 3D-Bilder angefertigt werden können, aus denen ein aktualisiertes digitales Abbild ermittelt werden kann. Da sich die momentane Ansicht eines Raumbereiches im Vergleich zu einem vorab erstellten digitalen Abbild auch ändern kann, indem etwa ein Möbelstück verschoben oder eine Tür geschlossen wurde, kann es vorteilhaft sein, wenn das digitale Abbild anhand der von der Person momentan wahrgenommenen, realen Umgebung aktualisiert wird.

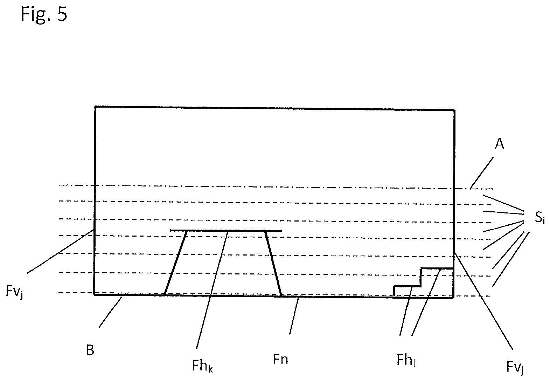

In weiterer Folge wird anhand der Fig. 4 und 5 die Ermittlung von Sicht- und Bewegungshindernissen aus dem digitalen Abbild erläutert. Wie bereits erwähnt wurde, kann mithilfe bekannter mathematischer Verfahren aus den zuvor beschriebenen Scans des Gebäudeinneren ein digitales Abbild als so genannter "Mesh" gewonnen werden, das die Oberflächen des Gebäudeinneren mithilfe von planaren Flächenelementen F ("Faces") approximiert. Mithilfe einer Applikation, die auf der Rechnereinheit 2 läuft, werden die Meshes, die von der Datenbrille 1 erhalten wurden, bearbeitet und daraus ein Gebäudeplan erstellt. Die Vertices und Faces werden anhand ihrer Höhe in Stockwerke eingeteilt. Danach werden bei den gescannten Meshes pro Stockwerk alle Vertices und Faces oberhalb einer Augenhöhenebene A, die der durchschnittlichen Augenhöhe entspricht, entfernt, sowie um fehlerhafte Faces bereinigt. Die genaue Höhenlage der Augenhöhenebene A ist dabei nicht wesentlich, sie wird im Rahmen des gegenständlichen Verfahrens beispielsweise mit einer Höhe von 1,80m angenommen. Das digitale Abbild des Gebäudeinneren wird somit gewissermaßen in Augenhöhenebene A "abgeschnitten". Was sich in Augenhöhe oder knapp darunter befindet wird als Teil eines Sicht- oder Bewegungshindernisses, also Wände, Einrichtung oder sonstiges, gewertet. Was sich in Bodennähe befindet, wird als solcher eingestuft und damit als passierbar bewertet. Hierbei wird wie folgt vorgegangen. Zunächst werden jene Flächenelemente F ermittelt, deren Flächennormale horizontal oder vertikal verlaufen, also Flächenelemente F, deren Orientierung vertikal oder horizontal ist. In weiterer Folge wird eine horizontale Schichtung zwischen der Bodenebene B des Gebäudeinneren und der angenommenen Augenhöhenebene A mit einer Mehrzahl von Schichtlagen Sᵢ (i=1,...N) einer vorgegebenen Schichtdicke vorgenommen. Im gezeigten Beispiel der Fig. 5 werden etwa sechs Schichtlagen Sᵢ (N=6) mit einer Schichtdicke von jeweils 30cm verwendet.

Zum Einen werden nun vertikale Flächenelemente Fvⱼ (j=1, ...M) als Sicht- oder Bewegungshindernisse ermittelt. Diese Sicht- oder Bewegungshindernisse werden in der Regel Wände, Raumteiler oder hohe Möbelstücke wie Schränke und dergleichen repräsentieren. Zum Anderen werden horizontale Flächenelemente Fhₖ (k=1,...P) oder eine Gesamtheit aneinandergrenzender horizontaler Flächenelemente Fhₖ in derselben Schichtlage als Sicht- oder Bewegungshindernisse ermittelt, falls in deren Umfangsbereich horizontale Nebenflächenelemente Fn auffindbar sind, die um mehr als eine Schichtlage unterhalb des horizontalen Flächenelements Fhₖ oder der Gesamtheit aneinandergrenzender horizontaler Flächenelemente Fhₖ liegen. Diese Sicht- oder Bewegungshindernisse werden in der Regel niedrige Möbelstücke wie Tische und dergleichen repräsentieren, im Beispiel der Fig. 5 ist etwa ein Tisch angedeutet. Die so als Sicht- oder Bewegungshindernis identifizierte Gesamtheit aneinandergrenzender horizontaler Flächenelemente Fhₖ können etwa einen Höhenabstand von 90-120 cm von der Bodenebene B aufweisen, wie im Beispiel der Fig. 5. Diese Schichtung ermöglicht es zudem, dass horizontale Flächenelemente Fh₁(l=1, ...Q), die sich in vertikal aufeinanderfolgenden Schichtlagen Sᵢ befinden, als Stufen identifiziert werden können, wie ebenfalls in der Fig. 5 angedeutet ist.

Horizontale Faces werden somit als Sitz- oder Tischflächen, Böden und ähnliches kategorisiert. Vertikale Faces werden hingegen als Wände und somit als nicht passierbare Sicht- oder Bewegungshindernisse kategorisiert. Durch Projektionen der Vertices und der Faces auf eine 2D-Fläche lässt sich ein Plan der gescannten Umgebung erstellen. Ein Beispiel eines solchen Plans ist in Figur 3 zu sehen. Anhand der Höhe und Ausrichtung der Normalvektoren der Faces kann die Visualisierung der Faces verfeinert werden, um Höhenunterschiede zwischen den Sicht- oder Bewegungshindernissen hervorheben.

Mithilfe der Erfindung wird somit ein Verfahren zum Einblenden eines computergenerierten, virtuellen Objektes in das von einer Person wahrgenommene Blickfeld eines realen Gebäudeinneren bereitgestellt, bei dem das virtuelle Objekt gemäß der momentanen Sichtachsen der Person unter Berücksichtigung verdeckender Elemente wie Wände, Türe, Raumteiler oder auch Möbel als Sicht- oder Bewegungshindernisse korrekt eingeblendet werden kann.

## Patentansprüche

1. Verfahren zum Einblenden eines computergenerierten, virtuellen Objektes in das von einer Person wahrgenommene Blickfeld eines realen Gebäudeinneren, insbesondere in das Sichtfeld einer transparenten Wiedergabeeinheit (1), wobei das Einblenden des virtuellen Objekts in Abhängigkeit von der momentanen Position und der Blickrichtung der Person erfolgt, und das Einblenden des virtuellen Objekts zusätzlich in Abhängigkeit von der Anwesenheit eines Sicht- oder Bewegungshindernisses für die Person erfolgt, **dadurch gekennzeichnet, dass** das Sicht- oder Bewegungshindernis anhand eines aus planaren Flächenelementen (F) gebildeten, digitalen Abbilds von Oberflächen des Gebäudeinneren ermittelt wird, indem eine horizontale Schichtung zwischen einer Bodenebene (B) des Gebäudeinneren und einer angenommenen Augenhöhenebene (A) mit einer Mehrzahl von Schichtlagen (Sᵢ) einer vorgegebenen Schichtdicke vorgenommen wird, und horizontale Flächenelemente (Fhₖ) oder eine Gesamtheit aneinandergrenzender horizontaler Flächenelemente (Fhₖ) in derselben Schichtlage als Sicht- oder Bewegungshindernis ermittelt werden, falls in deren Umfangsbereich horizontale Nebenflächenelemente (Fn) auffindbar sind, die um mehr als eine Schichtlage unterhalb des horizontalen Flächenelements (Fhₖ) oder der Gesamtheit aneinandergrenzender horizontaler Flächenelemente (Fhₖ) liegen, sowie vertikale Flächenelemente (Fvⱼ) als Sicht- oder Bewegungshindernis ermittelt werden.

2. Verfahren nach Anspruch 1, **dadurch gekennzeichnet, dass** die Schichtdicke mit einem Wert von 5-30 cm vorgegeben ist.

3. Verfahren nach Anspruch 1 oder 2, **dadurch gekennzeichnet, dass** das digitale Abbild mit den als Sicht- oder Bewegungshindernis ermittelten Flächenelementen (F) als zweidimensionales Abbild ermittelt wird.

4. Verfahren nach einem der Ansprüche 1 bis 3, **dadurch gekennzeichnet, dass** Verbindungslinien zwischen einem der momentanen Position und Blickrichtung entsprechenden Augenpunkt der Person und Bildpunkten des virtuellen Objekts errechnet und innerhalb des Abstandes zwischen dem Augenpunkt und den Bildpunkten des virtuellen Objekts das Vorliegen von Schnittpunkten der Verbindungslinien mit dem als planare Flächenelemente (F) vorliegenden Sicht- oder Bewegungshindernis ermittelt werden, wobei bei Vorliegen eines Schnittpunkts für einen Bildpunkt des virtuellen Objekts der betreffende Bildpunkt im Sichtfeld der Person nicht oder nicht sichtbar eingeblendet wird, und bei Fehlen eines Schnittpunkts für einen Bildpunkt des virtuellen Objekts der betreffende Bildpunkt sichtbar eingeblendet wird.

5. Verfahren nach einem der Ansprüche 1 bis 4, **dadurch gekennzeichnet, dass** mittels einer Kamera in einem vorgegebenen zeitlichen Abstand eine Abfolge von Kamerabildern der von der Person wahrgenommenen, realen Umgebung angefertigt wird, und mithilfe bekannter Verfahren zur Verfolgung von Bildmerkmalen zwischen einem aufgenommenen Kamerabild und einem einer bekannten Aufnahmeposition zugeordneten Referenzbild ein Verschiebungsvektor anhand der Bildmerkmale ermittelt wird, wobei bei Unterschreiten eines vorgegebenen Verschiebungswertes des Verschiebungsvektors die dem entsprechenden Referenzbild zugeordnete, bekannte Aufnahmeposition der Person als momentane Position zugewiesen wird.

6. Verfahren nach einem der Ansprüche 1 bis 5, **dadurch gekennzeichnet, dass** mittels einer zur Messung von Tiefeninformation fähigen Kamera der momentanen Position und Blickrichtung der Person entsprechende 3D-Bilder angefertigt werden, und mithilfe bekannter mathematischer Verfahren aus den so gewonnenen 3D-Kamerabildern ein aktualisiertes digitales Abbild ermittelt wird.

7. Vorrichtung umfassend eine tragbare, transparente Wiedergabeeinheit (1) zum Einblenden eines computergenerierten, virtuellen Objektes in das von einer Person wahrgenommene Blickfeld eines realen Gebäudeinneren, insbesondere in das Sichtfeld der transparenten Wiedergabeeinheit (1), sowie eine mit der Wiedergabeeinheit (1) über eine bidirektionale Datenverbindung verbundene Rechnereinheit (2), die zur Durchführung des Verfahrens nach einem der Ansprüche 1 bis 6 ausgelegt ist.

## Claims

1. Method for displaying a computer-generated virtual object in the field of view of a real building interior as perceived by a person, in particular in the field of view of a transparent display unit (1), wherein the virtual object is displayed depending on the current position and line of sight of the person, and the virtual object is additionally displayed depending on the presence of an obstacle to the person's vision or movement, **characterized in that** the obstacle to vision or movement is determined on the basis of a digital image of surfaces of the interior of the building formed from planar surface elements (F) by means of horizontal layering between a floor level (B) of the interior of the building at an assumed eye level plane (A) with a plurality of layer positions (Sᵢ) of a predetermined layer thickness, and horizontal surface elements (Fhₖ) or a plurality of mutually adjoining horizontal surface elements (Fhₖ) in the same layer are determined as obstacles to vision or movement if horizontal secondary surface elements (Fn) are found within their peripheral area which are located more than one layer position below the horizontal surface element (Fhₖ) or the entirety of mutually adjoining horizontal surface elements (Fhₖ), and vertical surface elements (FVⱼ) are determined as obstacles to vision or movement.

2. Method according to claim 1, **characterized in that** the layer thickness is specified as having a value of 5-30 cm.

3. Method according to claim 1 or 2, **characterized in that** the digital image is determined as a two-dimensional image with the surface elements (F) identified as obstacles to vision or movement.

4. Method according to one of claims 1 to 3, **characterized in that** connecting lines between an eye point of the person corresponding to the current position and direction of view and image points of the virtual object are calculated and, within the distance between the eye point and the image points of the virtual object, the presence of intersection points of the connecting lines with the obstacle to vision or movement present as planar surface element (F) is determined, wherein, if there is an intersection point for an image point of the virtual object, the image point in question is not displayed or is not visibly displayed in the person's field of view, and if there is no intersection point for an image point of the virtual object, the image point in question is visibly displayed.

5. Method according to one of claims 1 to 4, **characterized in that** a sequence of camera images of the real environment perceived by the person is produced by means of a camera at a predetermined time interval, and a displacement vector is determined on the basis of the image features using known methods for tracking image features between a captured camera image and a reference image assigned to a known recording position, wherein, if the displacement vector falls below a predetermined displacement value, the known recording position of the person assigned to the corresponding reference image is assigned as the current position.

6. Method according to one of claims 1 to 5, **characterized in that** 3D images corresponding to the current position and direction of view of the person are produced by means of a camera capable of measuring depth information, and an updated digital image is determined from the 3D camera images obtained in this way using known mathematical methods.

7. Device comprising a portable, transparent display unit (1) for displaying a computer-generated virtual object into the field of view of a real building interior perceived by a person, in particular into the field of view of the transparent display unit (1), and a computer unit (2) connected to the display unit (1) via a bidirectional data connection, which is designed to carry out the method according to one of claims 1 to 6.

## Revendications

1. Procédé destiné à insérer un objet virtuel généré par ordinateur dans le champ de vision, perceptible par une personne, d'un intérieur de bâtiment réel, en particulier dans le champ de vision d'une unité de reproduction transparente (1), dans lequel l'insertion de l'objet virtuel s'effectue en fonction de la position et de la direction d'observation instantanées de la personne, et l'insertion de l'objet virtuel s'effectue en outre en fonction de la présence d'un obstacle à la vision ou au mouvement de la personne, **caractérisé en ce que** l'obstacle à la vision ou au mouvement est déterminé à l'aide d'une imagerie numérique formée à partir d'éléments de surface plans (F) des surfaces de l'intérieur de bâtiment, une stratification horizontale entre un plan du sol (B) de l'intérieur de bâtiment et un plan acquis à hauteur d'yeux (A) étant effectuée avec une pluralité de couches individuelles (Si) d'une épaisseur prédéfinie, et des éléments de surface horizontaux (Fhₖ) ou un ensemble d'éléments de surface horizontaux contigus l'un à l'autre (Fhₖ) dans la même couche individuelle sont déterminés comme obstacle à la vision ou au mouvement, dans le cas où dans la zone de pourtour de ceux-ci sont détectables des éléments de face latérale horizontaux (Fn) qui sont situés plus d'une couche individuelle en dessous de l'élément de surface horizontal (Fhₖ) ou de l'ensemble d'éléments de surface horizontaux contigus l'un à l'autre (Fhₖ), de même des éléments de surface verticaux (Fvⱼ) sont déterminés comme obstacle à la vision ou au mouvement.

2. Procédé selon la revendication 1, **caractérisé en ce que** l'épaisseur de couche est prédéfinie avec une valeur de 5 à 30 cm.

3. Procédé selon la revendication 1 ou 2, **caractérisé en ce que** l'imagerie numérique avec les éléments de surface (F) déterminés comme obstacle à la vision ou au mouvement est déterminée comme imagerie bidimensionnelle.

4. Procédé selon l'une des revendications 1 à 3, **caractérisé en ce que** des lignes de liaison entre un point de vue de la personne correspondant à la position et direction d'observation instantanées et des points d'image de l'objet virtuel sont calculées et, à l'intérieur de la distance entre le point de vue et les points d'image de l'objet virtuel, l'existence de points d'intersection entre les lignes de liaison avec l'obstacle à la vision ou au mouvement existant comme éléments de surface plans (F) est déterminée, dans lequel lorsqu'il existe un point d'intersection pour un point d'image de l'objet virtuel, le point d'image concerné n'est pas inséré ou pas visiblement inséré dans le champ de vision de la personne, et en l'absence de point d'intersection pour un point d'image de l'objet virtuel, le point d'image concerné est visiblement inséré.

5. Procédé selon l'une des revendications 1 à 4, **caractérisé en ce qu'**au moyen d'une caméra, dans un intervalle de temps prédéfini, une succession d'images caméra de l'environnement réel perceptible par la personne est réalisée, et un vecteur de déplacement est déterminé à partir des caractéristiques d'image à l'aide de procédés connus destinés au suivi de caractéristiques d'image entre une image caméra capturée et une image de référence associée à une position de capture connue, dans lequel en cas de sous-dépassement d'une valeur de déplacement du vecteur de déplacement, la position de capture connue, associée à l'image de référence, de la personne est attribuée comme position instantanée.

6. Procédé selon l'une des revendications 1 à 5, **caractérisé en ce qu'**au moyen d'une caméra apte à la mesure d'informations de profondeur des images 3D correspondant à la position et à la direction d'observation instantanées de la personne sont réalisées, et à l'aide de procédés mathématiques connus une imagerie numérique actualisée est déterminée à partir des images caméra 3D ainsi obtenues.

7. Dispositif comprenant une unité de reproduction transparente portable (1) destiné à insérer un objet virtuel généré par ordinateur dans le champ de vision, perceptible par une personne, d'un intérieur de bâtiment réel, en particulier dans le champ de vision de l'unité de reproduction transparente (1), ainsi qu'une unité de calcul (2) reliée à l'unité de reproduction (1) par le biais d'une liaison de données bidirectionnelle et disposée pour mettre en œuvre le procédé selon l'une des revendications 1 à 6.
